# EUROPÄISCHE PATENTSCHRIFT

(11) **EP 1 745 883 B1**
(45) Veröffentlichungstag und Bekanntmachung des Hinweises auf die Patenterteilung: **19.01.2011**
(21) Anmeldenummer: 06013905.2
(22) Anmeldetag: 05.07.2006
(51) Int. Cl.: B23Q 7/10

(54) **Werkstückträgermagazin**
Workpiece carrier magazine
Magasin de pièces

(30) Priorität: 19.07.2005 DE 202005011513 U
(43) Veröffentlichungstag der Anmeldung: 24.01.2007
(73) Patentinhaber: Kraft, Friedhelm, 35452 Heuchelheim (DE)
(72) Erfinder: Kraft, Friedhelm, 35452 Heuchelheim (DE)
(74) Vertreter: von den Steinen, Axel

(56) Entgegenhaltungen:
- EP-A- 0 475 267
- US-A- 5 401 229

## Beschreibung

Die Erfindung betrifft ein Werkstückträgermagazin zum Bereitstellen, Fördern, Puffern, Lagern und/oder Stapeln von Werkstücken in vorzugsweise automatisierten Fertigungssystemen.

Gattungsgemäße Werkstückträgermagazine finden insbesondere in automatisierten Fertigungssystemen Verwendung, um die Werkstücke in definierter Lage zuführen zu können. Die Werkstückträgermagazine weisen dabei mehrere Werkstücknester auf, in denen jeweils zumindest ein Werkstück gespeichert werden kann. Außerdem ist bei gattungsgemäßen Werkstückträgermagazinen ein Datenträger vorgesehen, in dem werkstückbezogene Daten gespeichert werden. Beispielsweise können in einem solchen Datenträger Daten zur Produktbeschreibung oder zur Anzahl der im Werkstückträgermagazin enthaltenen Werkstücke eingelesen und später wieder abgerufen werden.

In modernen Fertigungsmagazinen werden die Anforderungen an die Präzision der Werkstücknester immer höher. Beispielsweise sind Produktionslinien zur Herstellung von Hochdruckpumpen bekannt, bei denen die Kolben nach Vermessung der jeweils individuell zugeordneten Zylinder exakt formkomplementär geschliffen werden. Um Beschädigungen der Werkstücke beim Ablegen in den Werkstücknestern des Werkstückträgermagazins zu verhindern, müssen die Werkstücknester extrem präzise gefertigt sein, da es beim Ablegen der Werkstücke in den Werkstücknestern aufgrund von kleinsten Lageabweichungen bereits zu Beschädigungen an den Werkstücken kommen kann, die eine Weiterverarbeitung ausschließen. Insbesondere auch im Bereich der Mikro- oder Nanotechnologie sind deshalb Werkstückträgermagazine mit hochgenauen Werkstücknestern erforderlich. Die Fertigung solcher hochpräziser Werkstückträgermagazine ist extrem aufwendig und kostenintensiv.

Die EP 0 475 267 beschreibt ein Werkstückträgermagazin zum Bereitstellen, Fördern, Puffern, Lagern und/oder Stapeln von Werkstücken in insbesondere automatisierten Fertigungssystemen, wobei das Werkstückträgermagazin mehrere Werkstücknester aufweist, in denen jeweils zumindest ein Werkstück anordenbar ist, und wobei am Werkstückträgermagazin zumindest ein auslesbarer und/oder wiederbeschreibbarer Datenträger vorgesehen ist, in dem werkstückbezogene Daten gespeichert und ausgelesen werden können.

Ausgehend von diesem Stand der Technik ist es deshalb Aufgabe der vorliegenden Erfindung, ein neues Werkstückträgermagazin vorzuschlagen, das ein hochpräzises beschädigungsfreies Ablegen und/oder Entnehmen der Werkstücke in den Werkstücknestern erlaubt und sogleich relativ kostengünstig herstellbar ist.

Diese Aufgabe wird durch ein Werkstückträgermagazin nach der Lehre des Anspruchs 1 gelöst.

Vorteilhafte Ausführungsformen der Erfindung sind Gegenstand der Unteransprüche.

Das erfindungsgemäße Werkstückträgermagazin beruht auf dem Grundgedanken, einen Datenträger des Werkstückträgermagazins zur Speicherung von werkstückträgerbezogenen Geometriedaten zu verwenden. Dies bedeutet mit anderen Worten, dass im Datenträger nicht nur werkstückbezogene Daten, sondern auch Daten zur Beschreibung des Werkstückträgersystems selbst, nämlich die Form der Werkstücknester und/oder die relative Lage der Werkstücknester am Werkstückträgermagazin gespeichert werden. Diese werkstückträgerbezogenen Geometriedaten können auf diese Weise jederzeit aus dem Datenträger ausgelesen und in den Fertigungsstationen des Fertigungssystems weiterverarbeitet werden.

Soll beispielsweise ein erfindungsgemäßes Werkstückträgermagazin in einer Fertigungsstation mit Werkstücken befüllt werden, so können die werkstückträgerbezogenen Geometriedaten in der Fertigungsstation zunächst aus dem Datenträger ausgelesen und beim Ablegen der Werkstücke in den Werkstücknestern berücksichtigt werden. Eine übermäßig genaue Fertigung der Werkstückträgermagazine ist insofern erfindungsgemäß nicht mehr erforderlich, da in Fällen, wo-die Geometrie der Werkstücknester von einer Soll-Geometrie abweicht, diese Abweichung bekannt ist und beim Einfüllen der Werkstücke in die Werkstücknester entsprechend berücksichtigt werden kann. Beispielsweise können die Geometriedaten bei der Ansteuerung eines Bestückungsroboters an die Steuerung des Roboters weitergegeben werden, sodass der Roboter die Werkstücke unter Berücksichtigung der gespeicherten Abweichungsdaten exakt über dem jeweils einzelnen Werkstücknest positioniert und dann erst ablegt.

Des Weiteren ist vorgesehen, dass die im Datenträger zu speichernden werkstückträgerbezogenen Geometriedaten in einem Messprozess als Messdaten messtechnisch erfasst werden und anschließend im Datenträger gespeichert werden.

Die Art der Datenaufbereitung der Geometriedaten ist grundsätzlich beliebig. Eine besonders einfache und kostengünstige Weiterverarbeitung der Geometriedaten wird ermöglicht, wenn diese als zwei- oder dreidimensionale Lagekoordinaten erfasst und gespeichert werden. Die Lagekoordinaten beziehen sich somit auf die relative Lage der Werkstücknester bezogen auf zumindest einen Referenzpunkt am Werkstückträgermagazin.

Des Weiteren ist vorgesehen, dass die Werkstücknester entsprechend einem vorgegebenen Soll-Lagemuster am Werkstückträgermagazin angeordnet sind. Beispielsweise können die Werkstücknester in den Schnittpunkten eines kartesischen Koordinatensystems angeordnet sein. Dieses Soll-Lagemuster ist dann Charakteristikum des Werkstückträgermagazins und kann beispielsweise durch geeignete Codierung auch im Datenträger gespeichert werden. Zur Beschreibung der relativen Lage der einzelnen Werkstücknester werden dann die Abweichungen der Ist-Lage jedes einzelnen Werkstücknests zur jeweiligen Soll-Lage im Soll-Lagemuster im Datenträger gespeichert. Diese Abweichungswerte können beispielsweise einem Industrieroboter als Offsetwerte weitergeleitet werden, wobei die Offsetwerte in Versatz des Industrieroboters relativ zur Standartpositionierung bei der Bestückung eines bestimmten Werkstücknests am Werkstückträgermagazin bestimmt.

Welcher Art die im Datenträger zu speichernden Geometriedaten sind, ist grundsätzlich beliebig. Soweit die Werkstücknester eine zylindrische, kreisförmige oder werkstückgebundene Geometrie aufweisen, sollte bevorzugt die Lage der Mittelachse der Werkstücknester relativ zu einem Referenzpunkt am Werkstückträgermagazin gespeichert werden.

Um eine exakte Positionierung des Werkstückträgermagazins im Fertigungssystem realisieren zu können, sollten geeignete Positionierungseinrichtungen, beispielsweise Positionierstifte, Positionierbuchsen und/oder Positionierausnehmungen, vorgesehen sein, mit deren Hilfe das Werkstückträgermagazin in einer definierten Lage positionierbar ist.

Um einen einfachen Datenaustausch beim Beschreiben und Auslesen des Datenträgers zu ermöglichen, sollte dieser bevorzugt berührungslos, insbesondere per drahtloser Datenübertragung, beschrieben bzw. ausgelesen werden können. Zur Lösung dieser Aufgabe können bekannte Transponderlösungen eingesetzt werden.

Zum Schutz des Datenträgers auch in rauen Umgebungen, insbesondere zum Schutz gegen Feuchtigkeit, sollte der Datenträger wasserdicht umschlossen sein. Dazu kann der Datenträger beispielsweise mit einer härtbaren Gießmasse in einer geeigneten Aufnahme des Werkstückträgermagazins eingegossen werden.

Zusätzlich zur erfindungsgemäßen Speicherung von werkstückträgerbezogenen Geometriedaten können im Datenträger auch noch zusätzliche Daten gespeichert werden. Beispielsweise können Teilenummern, Fertigungsmaße, Prüfprotokolle u. ä. zu jedem Werkstücknest als werkstückbezogene Daten gespeichert und anschließend wieder ausgelesen werden.

Welche Art von Werkstücken in den Werkstücknestern aufgenommen werden, ist grundsätzlich beliebig. Besonders große Bedeutung hat die erfindungsgemäße Bauart der Werkstückträgermagazine für hochpräzise mechanische Komponenten, beispielsweise von Hochdruckpumpen, da diese Komponenten hochpräzise gefertigt werden müssen und deshalb eine beschädigungsfreie Aufnahme der Komponenten im Werkstückträgermagazin von größter Bedeutung ist.

Eine Ausführungsform der Erfindung ist in den Zeichnungen schematisch dargestellt und wird nachfolgend beispielhaft erläutert.

Es zeigen:
**Fig. 1** ein Werkstückträgermagazin zur Aufnahme von Hochdruckpumpenkomponenten in Ansicht von oben;
**Fig. 2** das Werkstückträgermagazin gemäß Fig. 1 in seitlicher Ansicht.

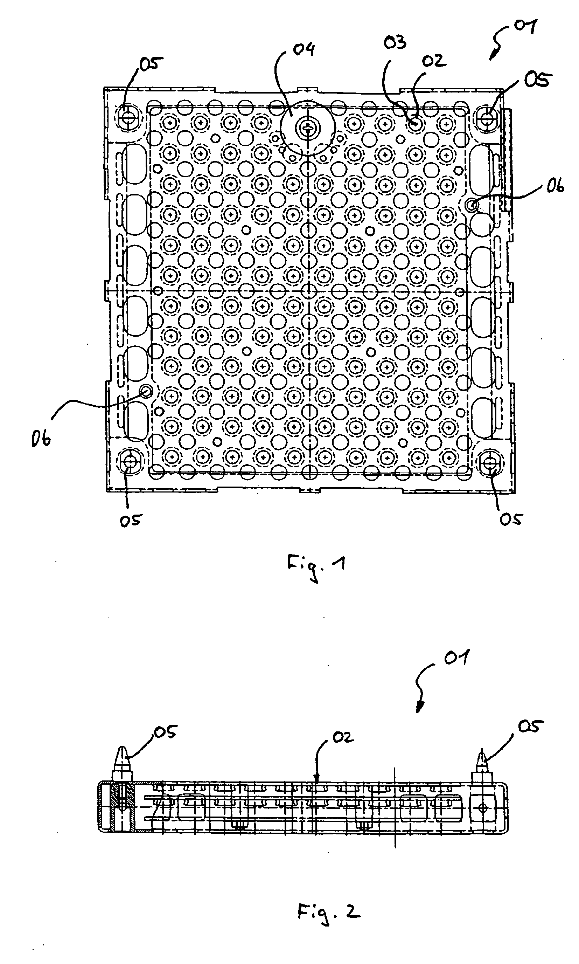

In Fig. 1 ist ein Werkstückträgermagazin 01 mit einer Vielzahl von Werkstücknestern 02 zur Aufnahme von Komponenten für eine Hochdruckpumpe in Ansicht von oben dargestellt. Die Werkstücknester 02 sind entsprechend einem Soll-Lagemuster an den Schnittpunkten eines kartesischen Koordinatensystems angeordnet, sodass sich die Lage jedes einzelnen Werkstücknests 02, d. h. die Lage der Mittelachse 03 jedes einzelnen Werkstücknests 02 durch Angabe von zwei Lagekoordinaten, nämlich einem X-Wert und einem Y-Wert, beschreiben lässt.

In einer Datenträgeraufnahme 04 des Werkstückträgermagazins 01 ist ein Datenträger, beispielsweise ein wiederbeschreibbarer Chip, der in Fig. 1 selbst nicht dargestellt ist, angeordnet. Der Chip ist in eine Giesmasse eingegossen und kann mittels drahtloser Datenübertragung beschrieben und ausgelesen werden. In dem Chip ist zum einen das Soll-Lagemuster Werkstücknester 02 gespeichert, so dass nach Anordnung des Werkstückträgermagazins 01 in einer Fertigungsstation durch Datenaustausch mit der Fertigungsstation an die Steuerung der Fertigungsstation mitgeteilt werden kann, an welcher relativen Position des Werkstückträgermagazins 01 jeweils Werkstücknester 02 vorhanden sind. Außerdem sind im Chip als weitere Geometriedaten die Abweichungen jedes einzelnen Werkstücknests 02 zur jeweiligen Soll-Lage im Soll-Lagemuster gespeichert. Diese Abweichungen werden vor der Inbetriebnahme des Werkstückträgermagazins in einem Messprozess bestimmt. Während des Messprozesses wird die Lage der Mittelachse 03 jedes einzelnen Werkstücknests 02 exakt vermessen und daraus die jeweilige Abweichung zur Soll-Lage ermittelt. Diese Abweichungswerte werden zusammen mit dem Soll-Lagemuster im Datenträger gespeichert.

Wird nun ein bestimmtes Werkstücknest 02 mit einem darin abzulegenden Werkstück angefahren, so wird der Steuerung des entsprechenden Handhabungsgerätes, beispielsweise eines Industrieroboters, durch Datenaustausch mit dem Chip des Werkstückträgermagazins 01 die Soll-Lage des jeweiligen Werkstücknests 02 und die Abweichung des Werkstücknestes 02 von seiner Soll-Lage geteilt. Auf diese Weise kann das Werkstück vom Handhabungsgerät exakt in der Flucht des Werkstücknests 02 positioniert und dann kollisionsfrei abgelegt werden.

Um das Werkstückträgermagazin 01 exakt in einer Fertigungsstation positionieren zu können, sind Positionierstifte 05 und Positionierbuchsen 06 vorgesehen.

## Patentansprüche

1. Werkstückträgermagazin (01) zum Bereitstellen, Fördern, Puffern, Lagern und/oder Stapeln von Werkstücken in insbesondere automatisierten Fertigungssystemen, wobei das Werkstückträgermagazin (01) mehrere Werkstücknester (02) aufweist, in denen jeweils zumindest ein Werkstück anordenbar ist, und wobei am Werkstückträgermagazin (01) zumindest ein auslesbarer und/oder wiederbeschreibbarer Datenträger vorgesehen ist, in dem werkstückbezogene Daten, gespeichert und ausgelesen werden können, wobei im Datenträger werkstückträgerbezogene Geometriedaten gespeichert sind,
**dadurch gekennzeichnet,**
**dass** die Geometriedaten die Form der Werkstücknester (02) und/oder die relative Lage der Werkstücknester (02) am Werkstückträgermagazin (01) beschreiben, wobei die werkstückträgerbezogenen Geometriedaten zur Beschreibung der Form und/oder relativen Lage der Werkstücknester (02) als Messdaten messtechnisch erfasst sind, die Werkstücknester (02) entsprechend einem vorgegebenen Soll-Lagemuster am Werkstückträgermagazin (01) angeordnet sind, wobei als Geometriedaten zur Beschreibung der relativen Lage der Werkstücknester (02) die Abweichungen der Ist-Lage jedes einzelnen Werkstücknests (02) zu der jeweiligen Soll-Lage im Soll-Lagemuster im Datenträger gespeichert sind.

2. Werkstückträgermagazin nach Anspruch 1,
**dadurch gekennzeichnet,**
**dass** als Geometriedaten zur Beschreibung der relativen Lage der Werkstücknester (02) zwei- oder dreidimensionalen Lagekoordinaten im Datenträger gespeichert sind, wobei die Lagekoordinaten die relative Lage der Werkstücknester (02) bezogen auf zumindest einen Referenzpunkt am Werkstückträgermagazin (01) beschreiben.

3. Werkstückträgermagazin nach Anspruch 1 oder 2,
**dadurch gekennzeichnet,**
**dass** die Werkstücknester (02) Lagetoleranzen von kleiner 0,02 mm gegenüber der Soll-Lage im Soll-Lagemuster aufweisen.

4. Werkstückträgermagazin nach einem der Ansprüche 1 bis 3,
**dadurch gekennzeichnet,**
**dass** Werkstücknester (02) eine zylindrische oder kreisförmige oder werkstückgebundene Geometrie aufweisen, wobei die Lage der Mittelachse (03) der Werkstücknester (02) relativ zu einen Referenzpunkt am Werkstückträgermagazin (01) im Datenträger gespeichert sind.

5. Werkstückträgermagazin nach einem der Ansprüche 1 bis 4,
**dadurch gekennzeichnet,**
**dass** am Werkstückträgermagazin (01) Positioniereinrichtungen, insbesondere Positionierstifte (05), Positionierbuchsen (06) und/oder Positionierausnehmungen, vorgesehen sind, mit deren Hilfe das Werkstückträgermagazin (01) in einer definierten Lage positionierbar ist.

6. Werkstückträgermagazin nach einem der Ansprüche 1 bis 5,
**dadurch gekennzeichnet,**
**dass** der Datenträger berührungslos, insbesondere auch per drahtloser Datenübertragung, beschrieben und/oder ausgelesen werden kann.

7. Werkstückträgermagazin nach einem der Ansprüche 1 bis 6,
**dadurch gekennzeichnet,**
**dass** der Datenträger wasserdicht umschlossen, insbesondere in eine härtbaren Gießmasse eingegossen, in einer Datenträgeraufnahme (04) angeordnet ist.

8. Werkstückträgermagazin nach einem der Ansprüche 1 bis 7,
**dadurch gekennzeichnet,**
**dass** im Datenträger Teilenummern, Fertigungsmaße, Prüfprotokolle, zu jedem Werkstücknest als werkstückbezogene Daten gespeichert sind.

9. Werkstückträgermagazin nach einem der Ansprüche 1 bis 8,
**dadurch gekennzeichnet,**
**dass** in den Werkstücknestern (02) des Werkstückträgermagazins (01) hochpräzise mechanische Komponenten, insbesondere formschlüssig, anordenbar sind.

10. Werkstückträgermagazin nach einem der Ansprüche 1 bis 9,
**dadurch gekennzeichnet,**
**dass** das Werkstückträgermagazin (01) im wesentlichen aus Edelstahlblech gefertigt ist.

## Claims

1. A workpiece holder magazine (01) for the provision, conveyance, buffering, storage and/or stacking of workpieces, in particular in automated production systems, wherein
the workpiece holder magazine (01) has a plurality of workpiece pockets (02), in each of which at least one workpiece can be arranged, and wherein
in the workpiece holder magazine (01) at least one readable and rewritable data storage medium is provided, in which workpiece related data can be stored and read out, wherein
workpiece holder-related geometrical data are stored in the data storage medium,
**characterised in that** the geometrical data describe the shape of the workpiece pockets (02), and/or the relative location of the workpiece pockets (02) in the workpiece holder magazine (01), wherein
the workpiece holder-related geometrical data to describe the shape and/or relative location of the workpiece pockets (02) are metrologically recorded as measurement data, the workpiece pockets (02) are arranged in accordance with a prescribed required locations array in the workpiece holder magazine (01), wherein for the description of the relative locations of the workpiece pockets (02) the deviations of the actual locations of each individual workpiece pocket (02) from the respective required location in the required locations array are stored in the data storage medium as geometrical data.

2. The workpiece holder magazine in accordance with Claim 1,
**characterised in that** two or three-dimensional location coordinates are stored in the data storage medium as geometrical data to describe the relative locations of the workpiece pockets (02), wherein
the location coordinates describe the relative location of the workpiece pockets (02) with reference to at least one reference point on the workpiece holder magazine (01).

3. The workpiece holder magazine in accordance with Claim 1 or 2,
**characterised in that** the workpiece pockets (02) have location tolerances of less than 0.02 mm relative to the required locations in the required locations array.

4. The workpiece holder magazine in accordance with one of the Claims 1 to 3,
**characterised in that** workpiece pockets (02) have a cylindrical, or circular, or workpiece-linked geometry, wherein
the locations of the central axes (03) of the workpiece pockets (02) relative to one reference point on the workpiece holder magazine (01) are stored in the data storage medium.

5. The workpiece holder magazine in accordance with one of the Claims 1 to 4,
**characterised in that** positioning devices are provided in the workpiece holder magazine (01), in particular positioning pins (05), positioning bushes (06) and/or positioning recesses, with the help of which the workpiece holder magazine (01) can be positioned in a defined location.

6. The workpiece holder magazine in accordance with one of the Claims 1 to 5,
**characterised in that** data can be written to and/or read out from the data storage medium in a contactless manner, in particular by means of wireless data transfer.

7. The workpiece holder magazine in accordance with one of the Claims 1 to 6,
**characterised in that** the data storage medium is arranged in a data storage medium seating (04), enclosed so as to be watertight, in particular cast into a hardenable casting compound.

8. The workpiece holder magazine in accordance with one of the Claims 1 to 7,
**characterised in that** part numbers, production dimensions, test records for each workpiece pocket are stored in the data storage medium as workpiece-related data.

9. The workpiece holder magazine in accordance with one of the Claims 1 to 8,
**characterised in that** high precision mechanical components can be arranged in the workpiece pockets (02) of the workpiece holder magazine (01), in particular in a form fit.

10. The workpiece holder magazine in accordance with one of the Claims 1 to 9,
**characterised in that** the workpiece holder magazine (01) is essentially produced from stainless steel plate.

## Revendications

1. Chargeur porte-pièce (01) pour la mise à disposition, le transport, la mise en mémoire tampon, le stockage et/ou l'empilement de pièces dans des systèmes de fabrication en particulier automatisés, le chargeur porte-pièce (01) présentant plusieurs cavités de pièce (02), dans chacune desquelles au moins une pièce peut être disposée, et au moins un support de données pouvant être lu et/ou à nouveau décrit étant prévu sur le chargeur porte-pièce (01), support dans lequel des données spécifiques à la pièce peuvent être stockées et lues, des données de géométrie spécifiques au porte-pièce étant stockées dans le support de données,
**caractérisé en ce que**
les données de géométrie décrivent la forme des cavités de pièce (02) et/ou la position relative des cavités de pièce (02) sur le chargeur porte-pièce (01), les données de géométrie spécifiques au porte-pièce pour la description de la forme et/ou de la position relative des cavités de pièce (02) étant enregistrées par des appareils de mesure sous forme de données de mesure, lesquelles cavités de pièce (02) sont disposées sur le chargeur porte-pièce (01) en fonction d'un modèle de position théorique prédéterminé, les écarts de la position réelle de chaque cavité de pièce (02) individuelle par rapport à la position théorique respective dans le modèle de position théorique étant mémorisés dans le support de données sous forme de données de géométrie pour la description de la position relative des cavités de pièce (02).

2. Chargeur porte-pièce selon la revendication 1,
**caractérisé en ce que**
des coordonnées de position en deux ou trois dimensions sont stockées dans le support de données sous forme de données de géométrie pour la description de la position relative des cavités de pièce (02), les coordonnées de position décrivant la position relative des cavités de pièce (02) par rapport à au moins un point de référence sur le chargeur porte-pièce (01).

3. Chargeur porte-pièce selon la revendication 1 ou 2,
**caractérisé en ce que**
les cavités de pièce (02) présentent des tolérances de position inférieures à 0,02 mm par rapport à la position théorique dans le modèle de position théorique.

4. Chargeur porte-pièce selon l'une quelconque des revendications 1 à 3,
**caractérisé en ce que**
des cavités de pièce (02) présentent une géométrie cylindrique ou circulaire ou liée à la pièce, la position de l'axe médian (03) des cavités de pièce (02) par rapport à un point de référence sur le chargeur porte-pièce (01) étant stockée dans le support de données.

5. Chargeur porte-pièce selon l'une quelconque des revendications 1 à 4,
**caractérisé en ce que**
des dispositifs de positionnement, en particulier des broches de positionnement (05), des douilles de positionnement (06) et/ou des cavités de positionnement, qui permettent de positionner le chargeur porte-pièce (01) dans une position définie, sont prévus sur le chargeur porte-pièce (01).

6. Chargeur porte-pièce selon l'une quelconque des revendications 1 à 5,
**caractérisé en ce que**
le support de données peut être décrit et/ou lu sans contact, en particulier également par transmission de données sans fil.

7. Chargeur porte-pièce selon l'une quelconque des revendications 1 à 6,
**caractérisé en ce que**
le support de données est entouré de façon étanche à l'eau, en particulier coulé dans une masse de scellement durcissable, disposé dans un logement de support de données (04).

8. Chargeur porte-pièce selon l'une quelconque des revendications 1 à 7,
**caractérisé en ce que**
des numéros de pièce, des cotes de fabrication, des rapports d'essai concernant chaque cavité de pièce sont stockés dans le support de données sous forme de données spécifiques à la pièce.

9. Chargeur porte-pièce selon l'une quelconque des revendications 1 à 8,
**caractérisé en ce que**
des composants mécaniques de haute précision peuvent être disposés, en particulier par complémentarité de formes, dans les cavités de pièce (02) du chargeur porte-pièce (01).

10. Chargeur porte-pièce selon l'une quelconque des revendications 1 à 9,
**caractérisé en ce que**
le chargeur porte-pièce (01) est fabriqué principalement à base de tôle d'acier inox.
